# EUROPEAN PATENT APPLICATION

(11) **EP 4 089 802 A1**
(43) Date of publication of application: **16.11.2022**
(21) Application number: 21188367.3
(22) Date of filing: 29.07.2021
(51) Int. Cl.: H01M 50/102, B23K 33/00, H01M 50/148, H01M 50/169

(54) **BATTERY MANUFACTURING METHOD AND BATTERY**

(30) Priority: 14.05.2021 CN 202110529359
(71) Applicant: CALB Co., Ltd., Changzhou City, Jiangsu Province (CN)
(72) Inventor: Pan, Fangfang, Changzhou City (CN); Xu, Jiuling, Changzhou City (CN); Zhang, Yongjie, Luoyang City (CN); Qi, Binwei, Luoyang City (CN)
(74) Representative: Becker, Eberhard

(57) **Abstract**

A battery manufacturing method and a battery are provided. The battery manufacturing method includes: providing a first housing (10), wherein the first housing (10) includes an intermediate part and a first flange (11), and a first positioning part (111) is formed on the first flange (11); providing a second housing (20), wherein the second housing (20) includes a bottom wall and a side wall, the side wall extends upward from the bottom wall, the side wall encloses to form an opening, the side wall extends outward from the opening to form a second flange (21), a second positioning part (211) is formed on the second flange (21), the intermediate part covers the opening, and the second flange (21) is in contact with the first flange (11); positioning and aligning the first housing (10) and the second housing (20) through the first positioning part (111) and the second positioning part (211); and welding the first flange (11) and the second flange (21).

## Description

### BACKGROUND

### Technical Field

The disclosure relates to the field of battery technology, and in particular to a battery manufacturing method and a battery.

### Description of Related Art

The battery in the related art includes a cell and a housing component. After completing the assembly of the cell, the assembly of the housing component needs to be implemented, that is, the assembly of a battery housing and a cover plate is implemented. Due to the structural limitations of the battery housing and the cover plate, it is difficult to implement quick alignment between the two during the assembly process.

### SUMMARY

According to a first aspect of the disclosure, a battery manufacturing method is provided, which includes the following.

A first housing is provided. The first housing includes an intermediate part and a first flange. A first positioning part is formed on the first flange.

A second housing is provided. The second housing includes a bottom wall and a side wall. The side wall extends upward from the bottom wall. The side wall encloses to form an opening. The side wall extends outward from the opening to form a second flange. A second positioning part is formed on the second flange. The intermediate part covers the opening. The second flange is in contact with the first flange.

The first housing and the second housing are positioned and aligned through the first positioning part and the second positioning part.

The first flange and the second flange are welded.

According to a second aspect of the disclosure, a battery is provided, which includes the battery obtained by the battery manufacturing method.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic flowchart of a battery manufacturing method according to an exemplary embodiment.
FIG. 2 is a schematic view of an exploded structural flow of a battery manufacturing method according to an exemplary embodiment.
FIG. 3 is a schematic view of exploded structures of a first housing and a second housing of a battery manufacturing method according to an exemplary embodiment.
FIG. 4 is a schematic view of a structural flow of a battery manufacturing method according to an exemplary embodiment.
FIG. 5 is a schematic view of an exploded structure of a battery according to an exemplary embodiment.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

The disclosure provides a battery manufacturing method and a battery to implement quick positioning and alignment of a first housing and a second housing.

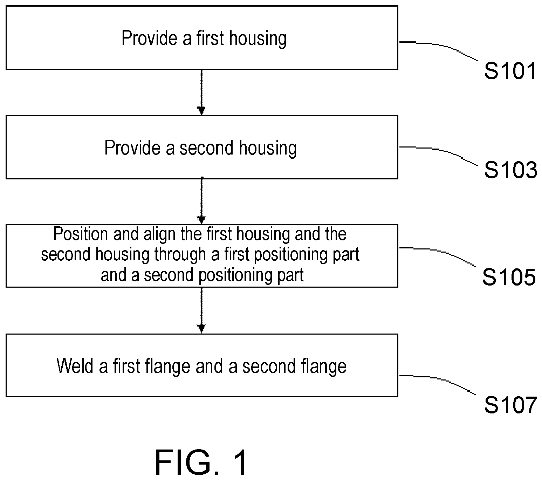

An embodiment of the disclosure provides a battery manufacturing method. Please refer to FIG. 1. The battery manufacturing method includes the following.

In Step S101, a first housing 10 is provided. The first housing 10 includes an intermediate part and a first flange 11. A first positioning part 111 is formed on the first flange 11.

In Step S103, a second housing 20 is provided. The second housing 20 includes a bottom wall and a side wall. The side wall extends upward from the bottom wall. The side wall encloses to form an opening. The side wall extends outward from the opening to form a second flange 21. A second positioning part 211 is formed on the second flange 21. The intermediate part covers the opening. The second flange is in contact with the first flange.

In Step S105, the first housing 10 and the second housing 20 are positioned and aligned through the first positioning part 111 and the second positioning part 211.

In Step S107, the first flange 11 and the second flange 21 are welded.

In the battery manufacturing method according to an embodiment of the disclosure, the first positioning part 111 and the second positioning part 211 are respectively formed on the first housing 10 and the second housing 20. Before welding the first flange 11 and the second flange 21, the first housing 10 and the second housing 20 may be quickly positioned and aligned through the first positioning part 111 and the second positioning part 211, thereby improving the positioning efficiency of the first housing 10 and the second housing 20 to reduce the manufacturing time of a battery.

It should be noted that the first housing 10 includes the intermediate part and the first flange 11. The intermediate part may be a plate structure. The first flange 11 is disposed around a circumferential direction of the intermediate part. The first flange 11 is a circumferentially closed structure. In some embodiments, it is not excluded that the intermediate part is formed with a recess, that is, the intermediate part has an accommodating cavity 40.

The second housing 20 includes the bottom wall and the side wall. The side wall extends upward from the bottom wall. The side wall encloses to form the opening, that is, the second housing 20 forms an accommodating cavity 40 and the opening is an opening of the accommodating cavity 40. The second flange 21 is formed in a circumferential direction of the opening of the accommodating cavity 40. The second flange 21 is a circumferentially closed structure. The depth of the accommodating cavity 40 of the second housing 20 may be greater than the depth of the accommodating cavity 40 of the first housing 10.

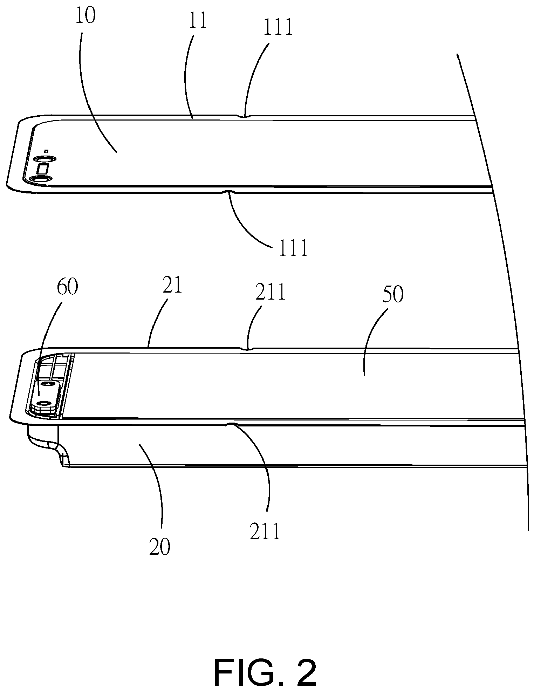

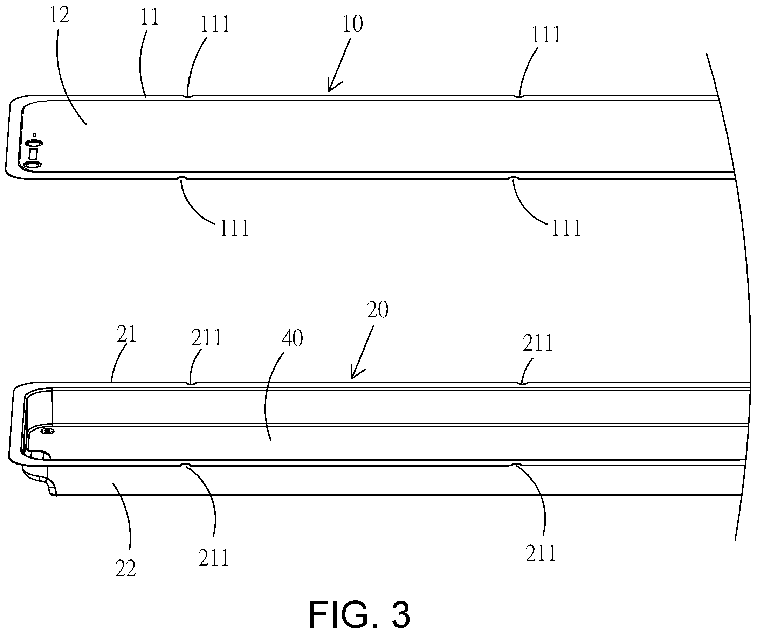

It should be noted that in conjunction with FIG. 2 and FIG. 3, the first flange 11 of the first housing 10 and the second flange 21 of the second housing 20 are disposed opposite to each other, so that the first positioning part 111 on the first flange 11 and the second positioning part 211 on the second flange 21 may implement positioning and alignment. The first flange 11 and the second flange 21 do not form an accommodating space of the battery.

It should be noted that the first housing 10 and the second housing 20 are provided regardless of the sequence.

The first flange 11 and the second flange 21 may be configured to connect the first housing 10 and the second housing 20, that is, the connection of the first housing 10 and the second housing 20 is implemented through welding the first flange 11 and the second flange 21.

Alternatively, the first flange 11 and the second flange 21 are configured to form the first positioning part 111 and the second positioning part 211 to facilitate subsequent positioning and alignment. Optionally, based on the welding of the first flange 11 and the second flange 21, a first main body part 12 of the first housing 10 and a second main body part 22 of the second housing 20 may be welded. For example, one of the first main body part 12 and the second main body part 22 is a plate, which also facilitates the welding of the first main body part 12 and the second main body part 22. The first flange 11 may be disposed around an outer circumferential edge of the first main body part 12, and the second flange 21 may be disposed around an outer circumferential edge of the second main body part 22, that is, the first flange 11 and the second flange 21 may be a circumferentially closed structure. Of course, it is not excluded that the first flange 11 and the second flange 21 are a circumferentially unclosed structure, as long as it may be ensured that the corresponding first positioning part 111 and second positioning part 211 may be formed on the first flange 11 and the second flange 21. The first main body part 12 includes the intermediate part. The second main body part 22 includes the bottom wall and the side wall.

In an embodiment, the first positioning part 111 and the second positioning part 211 are both positioning holes, that is, positioning holes are formed in the intermediate position between the first flange 11 and the second flange 21. During the process of positioning and aligning the first positioning part 111 and the second positioning part 211, a positioning pin may be inserted into the upper and lower positioning holes, thereby completing the positioning. The structure of the two positioning holes may be completely consistent with each other.

In an embodiment, as shown in FIG. 2 and FIG. 3, the first positioning part 111 and the second positioning part 211 are both positioning notches, that is, the positioning notches are formed at the edges of the first flange 11 and the second flange 21. During the process of positioning and aligning the first positioning part 111 and the second positioning part 211, a positioning pin may be inserted into the upper and lower positioning notches to complete the positioning. The structure of the two positioning notches may be completely consistent with each other. The configuration of the notches may also serve the function of relieving stress when welding the first housing 10 and the second housing 20.

In an embodiment, one of the first positioning part 111 and the second positioning part 211 is a positioning protrusion and the other one is a positioning recess. The positioning protrusion and the positioning recess match, so that the positioning protrusion and the positioning recess may cooperate with each other during the process of aligning the first housing 10 and the second housing 20 to complete the positioning. The positioning recess may be a groove with a bottom. Of course, the positioning recess may also be a through hole, which is not limited here.

In an embodiment, the battery manufacturing method further includes: cutting at least part of the first flange 11 and the second flange 21 after welding the first flange 11 and the second flange 21 to remove at least part of the first positioning part 111 and second the positioning part 211. The first positioning part 111 and the second positioning part 211 are mainly configured to position and align, so the first positioning part 111 and the second positioning part 211 may be removed after completing the welding, thereby reducing the lengths of the first flange 11 and the second flange 21, so as to reduce a circumferential occupied area of the battery. A laser cutting process may be adopted to cut the first flange 11 and the second flange 21.

It should be noted that the cutting of the first flange 11 and the second flange 21 may be completed through one cutting process, that is, the cutting of the second flange 2 may be completed when cutting the first flange 11. Of course, in some embodiments, it is not excluded to respectively cut the first flange 11 and the second flange 21 through two processes.

Optionally, when implementing the welding of the first housing 10 and the second housing 20 through the first flange 11 and the second flange 21, a part of the first flange 11 and the second flange 21 is cut, that is, a specific length of the first flange 11 and the second flange 21 is reserved.

Optionally, when implementing the welding of the first housing 10 and the second housing 20 through the first main body part 12 and the second main body part 22, the first flange 11 and the second flange 21 may be completely cut. Alternatively, a part of the first flange 11 and the second flange 21 is cut, that is, a specific length of the first flange 11 and the second flange 21 is reserved. At this time, the reserved first flange 11 and second flange 21 may be used as a heat dissipation fin. Of course, the reserved first flange 11 and second flange 21 may also be used as a subsequent installation and positioning component, which is not limited here.

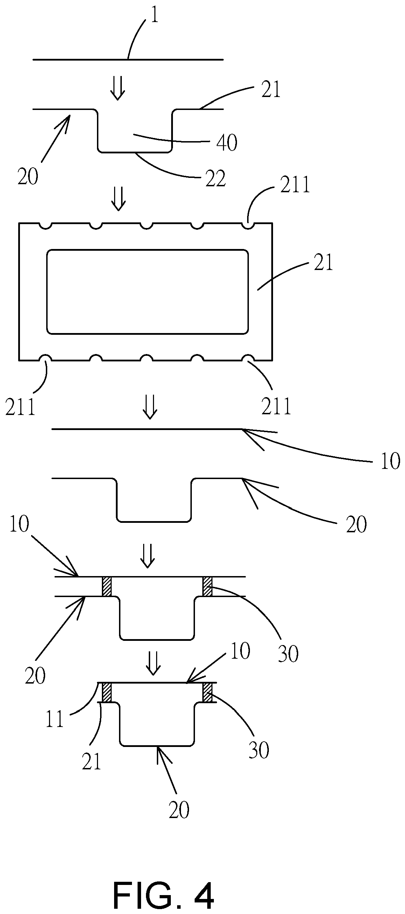

In an embodiment, as shown in FIG. 4, the first flange 11 and the second flange 21 are welded to form a welding seam 30. At least part of the first positioning part 111 does not overlap with the welding seam 30, and at least part of the second positioning part 211 does not overlap with the welding seam 30, thereby ensuring the welding quality. Also, the welding seam 30 will not be excessively cut off when subsequently cutting off the first positioning part 111 and the second positioning part 211. The welding seam 30 is a circumferentially closed structure, thereby ensuring the reliability of the connection between the first housing 10 and the second housing 20 and ensuring that a relatively closed space may be formed between the first housing 10 and the second housing 20.

In an embodiment, welding the first housing 10 and the second housing 20 includes: welding the first flange 11 and the second flange 21 to form the welding seam 30, that is, welding the first housing 10 and the second housing 20 through the first flange 11 and the second flange 21. The first flange 11 and the second flange 21 are partially cut off after completing the welding.

Optionally, the welding seam 30 and the first positioning part 111 are spaced apart, and the welding seam 30 and the second positioning part 211 are spaced apart. Cutting is performed between the welding seam 30 and the first positioning part 111 and between the welding seam 30 and the second positioning part 211 to remove the first positioning part 111 and the second positioning part 211. When welding the first flange 11 and the second flange 21, the first positioning part 111 and the second positioning part 211 need to be avoided, so that the first positioning part 111 and the second positioning part 211 may be completely cut off when subsequently cutting off a part of the first flange 11 and the second flange 21, and a part of the welding seam 30 will not be cut off.

In an embodiment, at least one of the first housing 10 and the second housing 20 is formed with the accommodating cavity 40 for accommodating components such as a cell.

The materials of the first housing 10 and the second housing 20 may be stainless steel or aluminum, which has good corrosion resistance and sufficient strength.

The thickness of the first housing 10 is consistent, which not only has strong structural stability, but also facilitates processing. The thickness of the second housing 20 is consistent. The thickness of the first housing 10 may be equal to the thickness of the second housing 20.

Optionally, the first housing 10 and the second housing 20 may be both formed with the accommodating cavities 40. After docking the first housing 10 and the second housing 20, the cell is located in a cavity formed by the two accommodating cavities 40. The depths of the accommodating cavities 40 of the first housing 10 and the second housing 20 may be the same or different, which is not limited here.

Optionally, the first housing 10 is a plate. The second housing 20 is formed with the accommodating cavity 40. The cell is located in the accommodating cavity 40. The configuration of the plate may facilitate subsequent connection and is less difficult to process.

In an embodiment, the accommodating cavity 40 is obtained through stamping a flat plate 1, that is, the accommodating cavity 40 is stamped to be formed through selecting the flat plate 1 and a stamping process. During the specific process of stamping, a supporting platform with a groove may be selected, so that the accommodating cavity 40 may be formed through stamping, that is, the first housing 10 or the second housing 20 is formed. A part of the flat plate 1 without stamping forms a flange.

Optionally, the first housing 10 is formed with the accommodating cavity 40. The first positioning part 111 is formed before stamping the flat plate 1, that is, the first positioning part 111 may be formed on the flat plate 1 first, and then the first housing 10 is stamped to be formed through a stamping process. At this time, a segment located on a plane where the opening of the accommodating cavity 40 is at is the first flange 11 of the first housing 10.

Optionally, the first housing 10 is formed with the accommodating cavity 40. The first positioning part 111 is formed after stamping the flat plate 1, that is, the first housing 10 may be stamped to be formed through the flat plate 1 first. At this time, a segment located on the plane where the opening of the accommodating cavity 40 is at is the first flange 11 of the first housing 10. Then, the first positioning part 111 is formed on the first flange 11.

Correspondingly, the second housing 20 is formed with the accommodating cavity 40. The second positioning part 211 is formed before stamping the flat plate 1, that is, the second positioning part 211 may be formed on the flat plate 1 first, and then the second housing 20 is stamped to be formed through a stamping process. At this time, a segment located on the plane where the opening of the accommodating cavity 40 is at is the second flange 21 of the second housing 20.

Alternatively, the second housing 20 is formed with the accommodating cavity 40. The second positioning part 211 is formed after stamping the flat plate 1, that is, the second housing 20 may be stamped to be formed through the flat plate 1 first. At this time, a segment located on the plane where the opening of the accommodating cavity 40 is at is the second flange 21 of the second housing 20. Then, the second positioning part 211 is formed on the second flange 21.

Optionally, the accommodating cavity 40 and the first positioning part 111 on the first housing 10 are obtained through synchronously stamping the flat plate 1, that is, the flat plate 1 may be simultaneously stamped through two different stamping heads, thereby forming the first housing 10 with the first positioning part 111. At this time, the first positioning part 111 may be a hole, a notch, a protrusion, etc.

Correspondingly, the accommodating cavity 40 and the second positioning part 211 on the second housing 20 are obtained through synchronously stamping the flat plate 1, that is, the flat plate 1 may be simultaneously stamped through two different stamping heads, thereby forming the second housing 20 with the second positioning part 211. At this time, the second positioning part 211 may be a hole, a notch, a protrusion, etc.

In an embodiment, as shown in FIG. 4, the flat plate 1 is provided. The second housing 20 is formed through stamping. The second positioning part 211 is formed on the second flange 21 of the second housing 20. The first housing 10 is formed. The first housing 10 may be a plate. The first positioning part 111 is formed on the first housing 10. The positioning of the first housing 10 and the second housing 20 is implemented through aligning the first positioning part 111 and the second positioning part 211. The first housing 10 and the second housing 20 are welded to form the welding seam 30. Finally, a part of the first flange 11 and the second flange 21 is cut off.

In an embodiment, along a length direction of the first housing 10, at least two first positioning parts 111 are formed on the first flange 11. Along a length direction of the second housing 20, at least two second positioning parts 211 are formed on the second flange 21. The first positioning part 111 correspond to the second positioning part 211 one-to-one, thereby ensuring the positioning accuracy and further accelerating the positioning speed.

In an embodiment, the first housing 10 further includes the first main body part 12. The first flange 11 is disposed around the outer circumferential edge of the first main body part 12. The second housing 20 further includes the second main body part 22. The second flange 21 is disposed around the outer circumferential edge of the second main body part 22. The first positioning parts 111 formed on the first flange 11 are located on two opposite sides of the first main body part 12, the first positioning parts 111 are symmetrically disposed with respect to a center line in a length direction of the first main body part 12. The second positioning parts 211 formed on the second flange 21 are located on two opposite sides of the second main body part 22, the second positioning parts 211 are symmetrically disposed with respect to a center line in a length direction of the second main body part 22. Multiple first positioning parts 111 are symmetrically disposed on the first flange 11 and multiple second positioning parts 211 are symmetrically disposed on the second flange 21. When assembling the first housing 10 and the second housing 20, the alignment of the first housing 10 and the second housing 20 may be conveniently and quickly implemented to save time and effort, and improve the manufacturing efficiency of the battery.

Optionally, along the length direction of the first housing 10, three first positioning parts 111 are spaced apart on the first flange 11. Correspondingly, along the length direction of the second housing 20, three second positioning parts 211 are spaced apart on the second flange 21.

It should be noted that the length direction of the first housing 10 and the length direction of the second housing 20 both refer to the longer extension directions of the first housing 10 and the second housing 20.

In an embodiment, before positioning and aligning the first housing 10 and the second housing 20, the cell is placed between the first housing 10 and the second housing 20 to seal the cell after welding the first flange 11 and the second flange 21, that is, a cell 50 is installed before completing the positioning of the first housing 10 and the second housing 20, so as to ensure that the position of the cell 50 is fixed after completing the welding of the first housing 10 and the second housing 20.

In an embodiment, the cell 50 is a laminated cell, which is not only convenient for assembling, but may also be processed to obtain a longer battery. The cell 50 has a first pole piece, a second pole piece electrically opposite to the first pole piece, and a diaphragm piece disposed between the first pole piece and the second pole piece that are stacked on top of one another, so that multiple pairs of the first pole piece and the second pole piece are stacked to form the laminated cell.

Optionally, the battery may be a wound battery, that is, the first pole piece, the second pole piece electrically opposite to the first pole piece, and the diaphragm piece disposed between the first pole piece and the second pole piece are wound to obtain the wound battery.

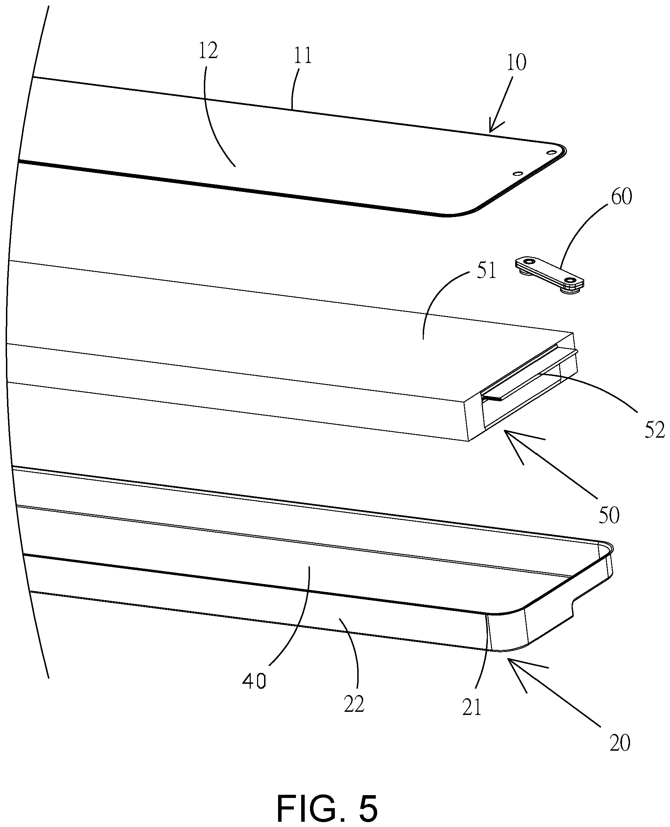

In an embodiment, as shown in FIG. 5, the cell 50 includes a cell main body 51 and a tab 52. The tab 52 extends from a length direction of the cell main body 51.

As shown in FIG. 5, a pole assembly 60 is installed on the first housing 10 or the second housing 20. Before welding the first housing 10 and the second housing 20, the tab 52 is connected with the pole assembly 60. The tab 52 and the pole assembly 60 may be directly connected, that is, the tab 52 and the pole assembly 60 may be directly welded, or the tab 52 and the pole assembly 60 may be connected through a metal adapting piece. The specific connection may be welding, but manners such as the use of a riveted joint are not excluded and are not limited here.

It should be noted that the cell main body 51 includes more than two pole pieces. The tab 52 includes more than two single tabs. The single tabs respectively extend from the corresponding pole pieces. The width of the single tab is less than the width of the pole piece. Multiple single tabs are stacked to form the tab 52, which is connected with the pole assembly 60. The tab 52 may be welded to the pole assembly 60. The single tab is made of metal foil with good electrical and thermal conductivity, such as aluminum, copper, or nickel.

In some embodiments, there are two pole assemblies 60. The two pole assemblies 60 are respectively a positive pole assembly and a negative pole assembly. There are also two tabs 52. The two tabs 52 are respectively a positive tab and a negative tab. The positive pole assembly is connected with the positive tab. The negative pole assembly is connected with the negative tab.

It should be noted that any one of laser welding, ultrasonic welding, and resistance welding may be adopted for the welding.

An embodiment of the disclosure also provides a battery. As shown in FIG. 5, the battery includes the battery obtained by the battery manufacturing method.

The battery according to an embodiment of the disclosure includes a first housing 10 and a second housing 20. Before welding the first housing 10 and the second housing 20, a first positioning part 111 and a second positioning part 211 are formed on the first housing 10 and the second housing 20. Before welding the first housing 10 and the second housing 20, the first housing 10 and the second housing 20 may be quickly positioned and aligned through the first positioning part 111 and the second positioning part 211, thereby improving the positioning efficiency of the first housing 10 and the second housing 20 to reduce the manufacturing time of the battery.

Optionally, the battery has an approximate rectangular structure, that is, omitting processing and manufacturing errors, the battery may have a rectangular structure.

In an embodiment, the length of the battery is a, where 400 mm ≤ a ≤ 2500 mm, the width of the battery is b, and the height of the battery is c, where 2b ≤ a ≤ 50b and/or 0.5c ≤ b ≤ 20c.

Further, 50 mm ≤b ≤ 200 mm and 10 mm ≤ c ≤ 100 mm.

Further, 4b ≤ a ≤ 25b and/or 2c ≤ b ≤ 10c.

For the battery in the above embodiment, in the case where sufficient energy density is ensured, the ratio of the length to the width of the battery is larger. Further, the ratio of the width to the height of the battery is larger.

In an embodiment, the length of the battery is a, the width of the battery is b, and the height of the battery is c, where 4b ≤ a ≤ 7b and/or 3c ≤ b ≤ 7c.

In an embodiment, the length of the battery is a and the width of the battery is b, where 4b ≤ a ≤ 7b, that is, the ratio of the length to the width of the battery in the embodiment is larger, so as to increase the energy density of the battery and facilitate subsequently forming a battery module.

In an embodiment, the height of the battery is c, where 3c ≤ b ≤ 7c, and the ratio of the width to the height of the battery is larger, which also facilitates formation in the case where sufficient energy density is ensured.

Optionally, the length of the battery may be 500 mm to 1500 mm, the width of the battery may be 80 mm to 150 mm, and the height of the battery may be 15 mm to 25 mm.

It should be noted that the length of the battery is the size of the battery in a length direction, the width of the battery is the size of the battery in a width direction, and the height of the battery is the size of the battery in a height direction, that is, the thickness of the battery. The battery has the length direction and the width direction, and the length direction and the width direction are both linear directions. The length direction may be a longer extension direction of the battery and the width direction may be a shorter extension direction of the battery. The height direction may be a thickness direction of the battery.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A battery manufacturing method, comprising:
providing a first housing (10), wherein the first housing (10) comprises an intermediate part and a first flange (11), and a first positioning part (111) is formed on the first flange (11);
providing a second housing (20), wherein the second housing (20) comprises a bottom wall and a side wall, the side wall extends upward from the bottom wall, the side wall encloses to form an opening, the side wall extends outward from the opening to form a second flange (21), a second positioning part (211) is formed on the second flange (21), the intermediate part covers the opening, and the second flange is in contact with the first flange;
positioning and aligning the first housing (10) and the second housing (20) through the first positioning part (111) and the second positioning part (211); and
welding the first flange (11) and the second flange (21).

2. The battery manufacturing method according to claim 1, further comprising:
cutting at least part of the first flange (11) and the second flange (21) after welding the first flange (11) and the second flange (21) to remove at least part of the first positioning part (111) and the second positioning part (211).

3. The battery manufacturing method according to claim 2, wherein the first flange (11) and the second flange (21) are welded to form a welding seam (30), at least part of the first positioning part (111) does not overlap with the welding seam (30), and at least part of the second positioning part (211) does not overlap with the welding seam (30).

4. The battery manufacturing method according to claim 3, wherein the welding seam (30) and the first positioning part (111) are spaced apart, the welding seam (30) and the second positioning part (211) are spaced apart, cutting is performed between the welding seam (30) and the first positioning part (111) and between the welding seam (30) and the second positioning part (211) to remove the first positioning part (111) and the second positioning part (211).

5. The battery manufacturing method according to claim 1, wherein the first positioning part (111) and the second positioning part (211) are both positioning holes; the first positioning part (111) and the second positioning part (211) are both positioning notches; or one of the first positioning part (111) and the second positioning part (211) is a positioning protrusion and other one is a positioning recess, and the positioning protrusion and the positioning recess match.

6. The battery manufacturing method according to claim 1, wherein the second housing (20) is formed with an accommodating cavity (40), and the accommodating cavity (40) is obtained through stamping a flat plate (1); and
the accommodating cavity (40) and the second positioning part (211) are obtained through synchronously stamping the flat plate (1).

7. The battery manufacturing method according to claim 1, wherein along a length direction of the first housing (10), at least two first positioning parts (111) are formed on the first flange (11), and along a length direction of the second housing (20), at least two second positioning parts (211) are formed on the second flange (21); and
the first positioning part (111) corresponds to the second positioning part (211) one-to-one.

8. The battery manufacturing method according to claim 7, wherein the second flange (21) is disposed around an outer circumferential edge of the opening; and
the first positioning parts (111) formed on the first flange (11) are located on two opposite sides of the intermediate part, the first positioning parts (111) are symmetrically disposed with respect to a center line in a length direction of the intermediate part, and the second positioning parts (211) formed on the second flange (21) are located on two opposite sides of the bottom wall, the second positioning parts (211) are symmetrically disposed with respect to a center line in a length direction of the bottom wall.

9. The battery manufacturing method according to claim 1, wherein before positioning and aligning the first housing (10) and the second housing (20), a cell is placed between the first housing (10) and the second housing (20) to seal the cell after welding the first flange (11) and the second flange (21).

10. A battery, comprising a battery obtained by the battery manufacturing method according to any one of claims 1-9.

11. The battery according to claim 10, wherein a length of the battery is a, a width of the battery is b, and a height of the battery is c, where 2b ≤ a ≤ 50b and/or 0.5c < b ≤ 20c; and 400 mm ≤ a ≤ 2500 mm.
